# EUROPEAN PATENT SPECIFICATION

(11) **EP 2 013 514 B1**
(45) Date of publication and mention of the grant of the patent: **27.01.2010**
(21) Application number: 06732985.4
(22) Date of filing: 05.04.2006
(51) Int. Cl.: F16F 15/315, H02K 7/02

(54) **CONTAINMENT, IN PARTICULAR FOR A FLYWHEEL DEVICE, AND CONTAINMENT ASSEMBLY**
SCHUTZHÜLLE, INSBESONDERE FÜR EINE SCHWUNGRADVORRICHTUNG, UND UMFASSUNGSANORDNUNG
CONFINEMENT, EN PARTICULIER POUR UN DISPOSITIF DE VOLANT, ET ENSEMBLE DE CONFINEMENT

(43) Date of publication of application: 14.01.2009
(73) Proprietor: C.C.M. Beheer B.V., 5674 CC Nuenen (NL)
(72) Inventor: THOOLEN, Franciscus, Johan, Marie, NL-6081 CX Haelen (NL)
(74) Representative: Van Gorkom, Lucas Marijn
(86) International application number: PCT/NL2006/000178
(87) International publication number: WO 2007/114682

(56) References cited:
- US-A- 4 511 190
- US-A- 5 387 451
- US-A1- 2005 188 777
- US-B1- 6 203 924

## Description

The present invention relates to a containment, in particular for a flywheel device, as defined in the preamble of claim 1 (see also US-A-2005/188777) for use in an energy storage system. The invention also relates to a containment assembly.

In an energy storage system employing a flywheel rotating at high speeds, a containment having a generally cylindrical wall is provided completely enclosing the flywheel. The containment primarily allows the flywheel to be rotated in a conditioned environment, such as vacuum, to minimize friction losses in the energy storage. Further, since the flywheel is a component subjected to extremely high mechanical stresses during operation, the containment functions as a safety barrier in case of failure of the flywheel, the containment preventing parts of the flywheel from causing damage to persons and objects in the vicinity of the energy storage system.

Taking into consideration a flywheel at least partially made from a fiber reinforced polymer material, a failure of the flywheel may comprise fibers rupturing during operation, due to fabrication failures, such as winding errors or contamination of the flywheel during manufacture. Fiber rupture results in particles coming free from the flywheel. Such particles collide with the containment wall, which may be characterized as a radial crash since the forces exerted by the particles on the containment wall are directed, inter alia, in a radial direction. Afterwards, the debris resulting from the rupture and the radial crash will be deflected in axial direction by the cylindrical containment wall and acts like a kind of highly pressurized fluid. This may be characterized as an axial crash, since the forces exerted by the particles on the containment wall are directed substantially in an axial direction.

In the prior art, a problem exists in that the containment, on the one hand, must have sufficient strength to withstand a radial crash and an axial crash. On the other hand, since the flywheel device may be used in a transportation application, the mass of the containment should be as low as possible.

U.S. Patent No. 5,387,451 discloses a flywheel containment comprising a containment vessel, and an annular shaped honeycomb layer located around the outer diameter of a flywheel at the side of the containment vessel facing said outer diameter. The honeycomb layer includes a plurality of pores that are open on the inner diameter of the honeycomb layer, and are essentially designed to withstand the radial impact energy, and to trap flywheel debris such as dust and long strands of fiber created if a small portion of the flywheel fails. No additional measures to withstand the axial impact of debris (axial crash) are described.

U.S. Patent No. 6,203,924 discloses a complex multi-layer lightweight flywheel containment composed of a combination of at least three layers of various materials which absorb the energy of a flywheel structural failure. The containment consists of three radially positioned layers comprising a structural layer (such as steel), an energy absorbing layer (such as an aluminum or Kevlar or carbon composite honeycomb structure), and a support layer (such as a metal or fiber glass or carbon composite layer). This known containment does not take into account the possibly destructive influence of an axial impact load (axial crash).

An object of the invention is to provide a containment and containment assembly which will effectively withstand the radial, axial and tangential impact in case of a flywheel failure.

Another object of the invention is to provide a containment and containment assembly which are light-weight and compact.

According to an aspect of the present invention, at least one of these objects is reached in a containment, in particular for a flywheel device, comprising: an essentially cylindrical inner containment wall having two opposite edges; an outer containment overwrap enclosing said inner containment wall; and a first containment cover and a second containment cover abutting the respective edges of the inner containment wall, wherein the inner containment wall is made from metal, the first and second containment covers are made from metal or a composite material, and the outer containment overwrap is made from a low density, high strength material. The containment is supported to the environment by a support construction comprising first and second clamping rings extending near the outer circumference of the respective first and second containment covers. The clamping rings are connected to each other by axial impact absorbing elements. The axial impact absorbing elements, like pulling rods, are able to withstand the axial forces of the impact of debris at the top and bottom covers. In this way, also friction joints are formed between the first and second containment covers and respective clamping rings, which friction joints limit the tangential reactions to the environment as they enable a defined, torque limited rotation of the whole containment in case of a tangentially directed load.

In an embodiment, between each containment cover and an associated clamping ring an interface ring is mounted, providing improved control of said torque. The interface ring may be made of polyethylene. In an embodiment, the interface ring is made of high density polyethylene (HDPE).

In an embodiment, a clamping ring comprises a ring-shaped part extending over the associated containment cover, and further may comprise a cylinder-shaped part extending over an area of the associated edge of the inner containment wall. The clamping ring thus comprises one (or even more) transitions, thus creating a labyrinth to act as an additional obstruction for any debris seeking its way out of the containment at an edge of the inner containment wall.

In an embodiment, the outer containment overwrap is made of dry wound fibers.

In a further embodiment, the fibers have been wound essentially tangentially. An outer layer of the outer containment overwrap may be impregnated for surface finishing and added axial strength.

The combination of the inner containment wall and the outer containment overwrap absorbs radial impact exerted by debris, thus minimizing deflection of debris into an axial direction. The outer containment overwrap will take up the main part of the energy of the radial impact of the debris resulting from e.g. a flywheel rupture. After the radial crash, the metal (e.g. aluminum) inner containment wall with outer containment overwrap may deflect part of the debris, which acts like a kind of highly pressurized incompressible fluid, in axial direction and causes an "axial crash" against the first containment cover and the second containment cover. It is a known problem in many flywheel systems, that this axial, fluidic impact causes safety problems in the design of the system. In the described invention, the elasticity of the composite containment wall will absorb a significant part of the energy of the debris before the debris acts like an incompressible fluid and is deflected in axial direction.

In an embodiment, the outer containment overwrap contains a low density (low specific weight), high strength material. Such material may contain high-performance fibers, e.g. DYNEEMA^{™} fibers (polyethylene), or Kevlar^{™}, Nomex^{™}, Twaron^{™} fibers (aramide).

In an aspect of the invention, there is provided a containment assembly, comprising a containment according to the invention, wherein the containment is supported in a cardanic suspension frame. Thus, the containment assembly may retain its operation orientation when a structure in which the containment assembly (and consequently also the containment) is mounted, changes its orientation. As an example, such a structure may be a vehicle running along an uneven path. The cardanic suspension frame decreases gyroscopic loading and associated wear of bearings used inside the containment, e.g. bearings in a flywheel device.

In an embodiment of the containment assembly, wherein the containment accommodates a flywheel device, the containment accommodating the flywheel device having a point of gravity, the cardanic suspension frame is connected to the containment along a pivot axis above the point of gravity. With such a construction, the containment assembly has a stable equilibrium orientation through the action of the force of gravity.

In another embodiment of the containment assembly, wherein the containment accommodates a flywheel device, the containment accommodating the flywheel device having a point of gravity, the cardanic suspension frame is connected to the containment along a pivot axis through the point of gravity. With such a construction, environmental tilting movements are decoupled from the containment, and thus the flywheel bearing loads will be minimized.

The features and advantages of the invention are explained in further detail in the following description of exemplary embodiments by way of the accompanying drawings, wherein:
Fig. 1 schematically shows a cross-section of a flywheel unit with a flywheel device and a containment according to the invention;
Fig. 2 schematically shows an enlarged detailed view, partially in cross-section, of the flywheel unit of Fig. 1;
Figs. 3 and 4 show a perspective view and an enlarged detailed view, partially in cross-section, respectively, of another flywheel unit with a flywheel device and a containment according to the invention; and
Fig. 5 shows a perspective view of a containment assembly, where the containment according to the invention is supported in a cardanic suspension frame.

In the different Figures, identical reference numerals indicate similar parts or parts having a similar function.

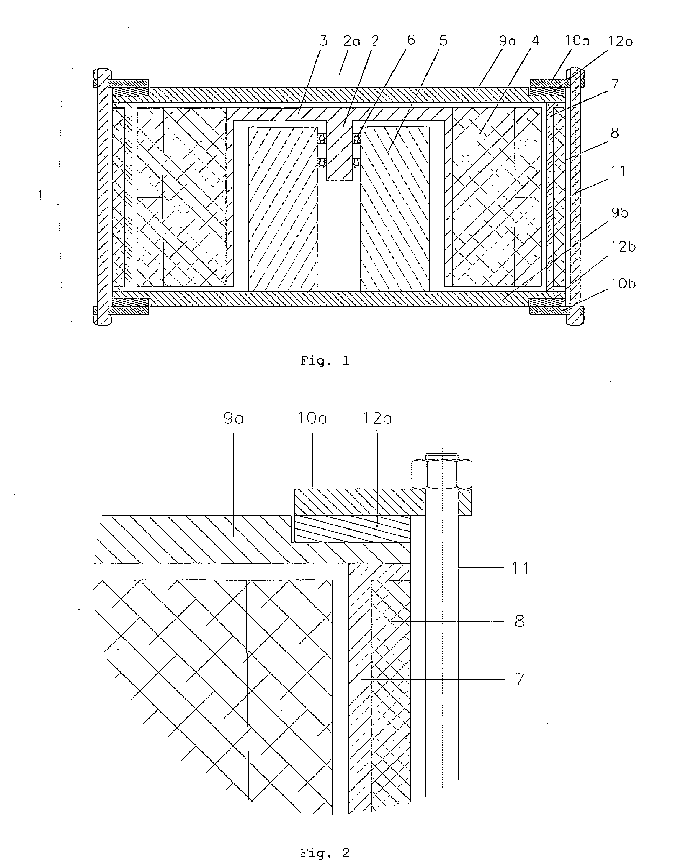

Referring to Figs. 1 and 2, a flywheel unit 1 comprises a central shaft 2 which defines an axis of rotation 2a and a flywheel 4 having an annular shaped cross-section as seen in a plane perpendicular to the axis of rotation 2a. The flywheel 4 is connected to the central shaft 2 via a rotor flange 3. The central shaft 2 is supported by a stator 5 of an electrical motor/generator via suitable bearings 6 (e.g. hybrid ceramic angular contact ball bearings). The flywheel 4 may be composed of several components, and may be made of any material suitable for flywheel manufacture. Preferably, the flywheel 4 is made of composite material, such as fiber reinforced polymer material.

A flywheel containment, enclosing the flywheel 4, comprises a cylindrical (inner) containment (vessel) wall 7, e.g. made of metal, such as aluminum, wrapped with a layer 8 (outer containment overwrap) of a low density, high strength material, and having a layer thickness suitable to absorb the impact of any flywheel debris in case of failure. Further, the flywheel containment comprises a top cover 9a and a bottom cover 9b, e.g. made from metal or composite material. The top cover 9a abuts an upper edge of the containment wall 7, whereas the bottom cover 9b abuts a lower edge of the containment wall 7. The top cover 9a and the bottom cover 9b may be connected to the containment wall 7 in a known way, e.g. by bolts.

The flywheel containment is supported to the environment through a support construction clamping the containment in between an annular shaped top clamping ring 10a, and an annular shaped bottom clamping ring 10b by a set of pull rods 11, which may be indicated more generally as axial impact absorbing elements. In between each of the top cover 9a and bottom cover 9b, and the clamping rings 10a and 10b, respectively, an annular shaped interface ring 12a and 12b, respectively, may optionally be mounted, for example made of PE (polyethylene), in particular HDPE (high density PE). Thus, the containment is supported by means of so-called "friction joints", realized by clamping the flywheel containment between the two clamping rings 10a and 10b, to be able to withstand radial and axial impact loads, and high tangential loads which can be exerted on the containment wall, for instance when the flywheel is locked by the flywheel debris. The friction joints limit the tangential reactions to the environment as it enables a torque limited rotation of the containment, comprising the containment wall 7, the layer 8, the top cover 9a, and the bottom cover 9b, relative to the support construction of top clamping ring 10a, bottom clamping ring 10b and pull rods 11.

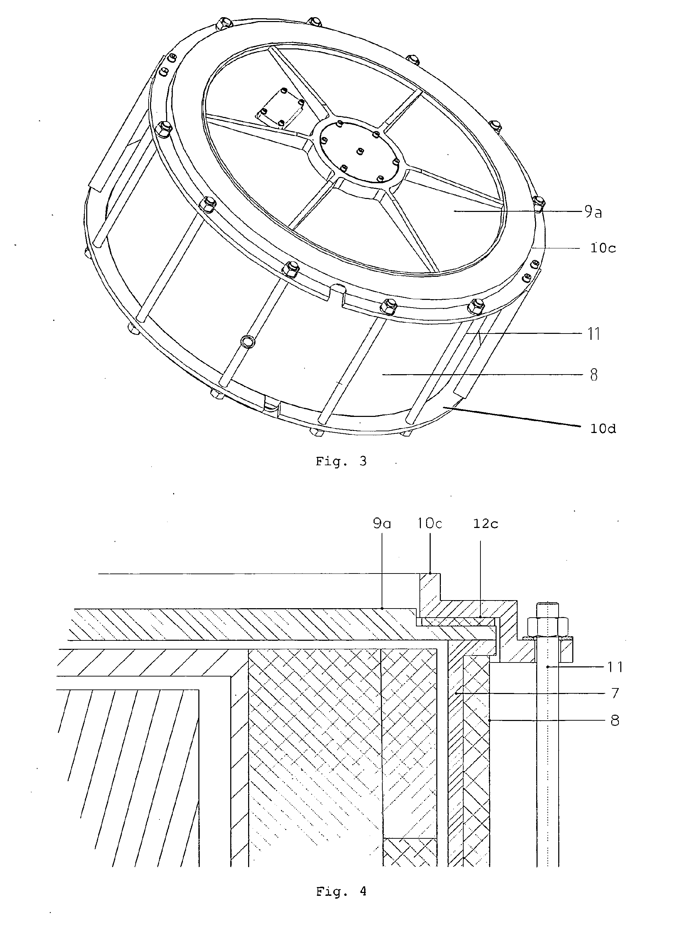

Figs. 3 and 4 illustrate an alternative to clamp the containment. Clamping rings 10c and 10d do not extend in one plane, but comprise some transitions in order to create a kind of labyrinth. The clamping rings 10c, 10d comprise a ring-shaped part extending over the associated containment cover 9a, 9b, respectively, and a cylinder-shaped part extending over the area of the associated edge of the inner containment wall 7. An interface ring 12c is placed between top cover 9a and clamping ring 10c, and likewise an interface ring 12c is placed between bottom cover 9b (not shown in Figs. 3 and 4) and clamping ring 10d. The container wall is provided with radially extending collars abutting the top cover 9a and the bottom cover 9b, respectively.

In case of a flywheel failure, the axial impact of the debris at the top cover 9a and bottom cover 9b might cause a gap between the containment wall 7 and the top and bottom covers 9a, 9b, due to the high axial forces exerted on the top and bottom covers 9a, 9b. The clamping rings 10c, 10d will act as an additional obstruction for any debris possibly escaping through the gap between the containment wall 7 and top cover 9a or the bottom cover 9b.

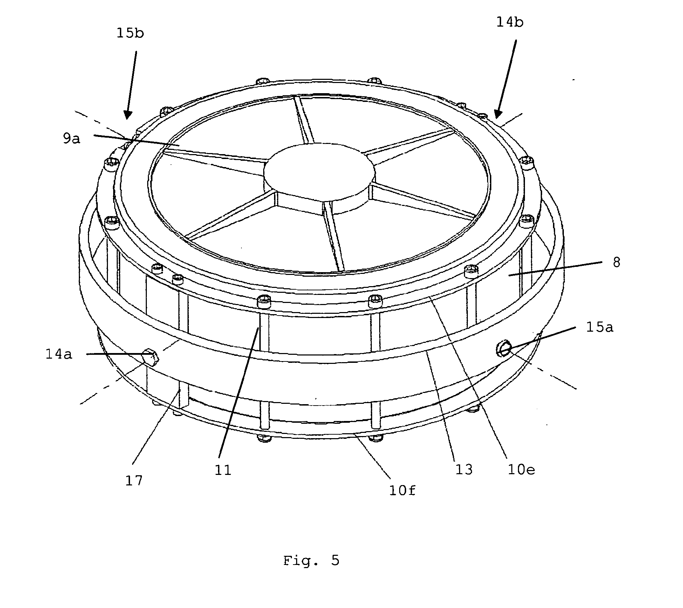

As illustrated in Fig. 5, the support construction (and thereby the containment) may be fitted in a cardanic suspension frame 13, inter alia to provide the flywheel unit with a stable position relative to the environment, and to reduce gyroscopic loading and wear in the bearings 6 (Fig. 1). Fig. 5 shows a containment assembly where the cardanic suspension frame 13 has two hinge axes directed at rights angles to each other, a first hinge axis defined by pivot joints 14a, 14b (pivot joint 14b not being visible in Fig. 5), and a second hinge axis defined by pivot joints 15a, 15b (pivot joint 15b not being visible in Fig. 5). The containment is mounted in the cardanic suspension frame 13 at the pivot joints 14a, 14b provided in supports 17 connected between clamping rings 10e and 10f. The cardanic suspension frame 13 is configured to be coupled to another structure, e.g. a vehicle structure, at the pivot joint 15a, 15b.

The first hinge axis through the pivot joints 14a, 14b may be situated above a point of gravity of the containment accommodating a flywheel device, or may, according to Fig. 5, essentially intersect the point of gravity of the containment accommodating the flywheel device, depending on design considerations.

The present invention combines the advantages of a simple, light-weight and compact containment construction including a support structure with high strength for radial, axial and tangential impact loads, where the containment wall is created out of only two layers.

The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language).

As required, detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. Further, the terms and phrases used herein are not intended to be limiting; but rather, to provide an understandable description of the invention.

## Claims

1. Containment, in particular for a flywheel device, the containment comprising:
- an essentially cylindrical inner containment wall (7) having two opposite edges;
- an outer containment overwrap (8) enclosing said inner containment wall; and
- a first containment cover (9a) and a second containment cover (9b) abutting the respective edges of the inner containment wall (7),
**characterized in that** the inner containment wall (7) is made from metal, the first and second containment covers (9a, 9b) are made from metal or a composite material, and the outer containment overwrap (8) is made from a low density, high strength material, and **characterized by** a support construction comprising first and second clamping rings (10a, 10b; 10c, 10d; 10e, 10f) extending near the outer circumference of the respective first and second containment covers (9a, 9b), the clamping rings being connected to each other by axial impact absorbing elements (11).

2. Containment according to claim 1, wherein between a containment cover (9a, 9b) and an associated clamping ring (10a, 10b; 10c) an interface ring (12a, 12b; 12c) is mounted.

3. Containment according to claim 2, wherein the interface ring (12a, 12b; 12c) is made of polyethylene (PE).

4. Containment according to any of the preceding claims, wherein a clamping ring (10a, 10b; 10c, 10d; 10e, 10f) comprises a ring-shaped part extending over the associated containment cover (9a, 9b).

5. Containment according to claim 4, wherein a clamping ring (10c, 10d; 10e, 10f) further comprises a cylinder-shaped part extending over an area of the associated edge of the inner containment wall (7).

6. Containment according to any of the preceding claims, wherein the inner containment wall (7) is made of aluminum.

7. Containment according to any of the preceding claims, wherein the outer containment overwrap (8) contains fibers, such as carbon fibers, glass fibers, or synthetic fibers.

8. Containment according to claim 7, wherein the outer containment overwrap (8) contains aramide fibers.

9. Containment according to claim 8, wherein the outer containment overwrap (8) contains at least one of Kevlar^{™}, Nomex^{™} and Twaron^{™} fibers.

10. Containment according to claim 7, wherein the outer containment overwrap (8) contains high performance polyethylene fibers.

11. Containment according to claim 10, wherein the outer containment overwrap (8) contains DYNEEMA^{™} fibers.

12. Containment according to any of the preceding claims, wherein the outer containment overwrap is made of dry wound fibers.

13. Containment according to any of the preceding claims, wherein the outer containment overwrap (8) contains fibers wound essentially tangentially.

14. Containment assembly comprising a containment according to any of the preceding claims, wherein the containment is supported in a cardanic suspension frame (13).

15. Containment assembly according to claim 14, wherein the containment accommodates a flywheel device, the containment accommodating the flywheel device having a point of gravity, and the cardanic suspension frame (13) is connected to the containment along a pivot axis (14a, 14b) above the point of gravity.

16. Containment assembly according to claim 14, wherein the containment accommodates a flywheel device, the containment accommodating the flywheel device having a point of gravity, and the cardanic suspension frame (13) is connected to the containment along a pivot axis (14a, 14b) through the point of gravity.

## Patentansprüche

1. Gehäuse, insbesondere für eine Schwungradeinrichtung, wobei das Gehäuse umfasst:
- eine im Wesentlichen zylinderförmige Gehäuseinnenwand (7) mit zwei einander gegenüberliegenden Kanten;
- eine Gehäuseaußenhülle (8), welche die Gehäuseinnenwand umschließt; und
- eine erste Gehäuseabdeckung (9a) und eine zweite Gehäuseabdeckung (9b), die an die jeweiligen Kanten der Gehäuseinnenwand (7) anstoßen,
**dadurch gekennzeichnet, dass** die Gehäuseinnenwand (7) aus Metall hergestellt ist, die erste und die zweite Gehäuseabdeckung (9a, 9b) aus Metall oder einem Verbundmaterial hergestellt sind und die Gehäuseaußenhülle (8) aus einem hochfesten Material mit geringer Dichte hergestellt ist,
und **gekennzeichnet durch** eine Haltekonstruktion mit einem ersten und einem zweiten Klemmring (10a, 10b; 10c, 10d, 10e, 10f), die sich nahe des äußeren Umfangs der jeweiligen ersten und zweiten Gehäuseabdeckung (9a, 9b) erstrecken, wobei die Klemmringe miteinander **durch** einen axialen Stoß absorbierende Elemente (11) verbunden sind.

2. Gehäuse nach Anspruch 1, in welchem zwischen einer Gehäuseabdeckung (9a, 9b) und einem zugehörigen Klemmring (10a, 10b; 10c) ein Anschlussring (12a, 12b; 12c) angebracht ist.

3. Gehäuse nach Anspruch 2, in welchem der Anschlussring (12a, 12b; 12c) aus Polyethylen (PE) hergestellt ist.

4. Gehäuse nach einem der vorhergehenden Ansprüche, in welchem ein Klemmring (10a, 10b-, 10c, 10d, 10e, 10f) einen ringförmigen Teil umfasst, der sich über die zugehörigen Gehäuseabdeckung (9a, 9b) erstreckt.

5. Gehäuse nach Anspruch 4, in welchem ein Klemmring (10c, 10d; 10e, 10f) ferner einen zylinderförmigen Teil umfasst, der sich über einen Bereich der zugehörigen Kante der Gehäuseinnenwand (7) erstreckt.

6. Gehäuse nach einem der vorhergehenden Ansprüche, in welchem die Gehäuseinnenwand (7) aus Aluminium hergestellt ist.

7. Gehäuse nach einem der vorhergehenden Ansprüche, in welchem die Gehäuseaußenhülle (8) Fasern enthält, wie Kohlenstofffasern, Glasfasern oder synthetische Fasern.

8. Gehäuse nach Anspruch 7, in welchem die Gehäuseaußenhülle (8) Aramidfasern enthält.

9. Gehäuse nach Anspruch 8, in welchem die Gehäuseaußenhülle (8) Fasern wenigstens aus einem dem Material von Kevlar™, Nomex™ und Twaron™ enthält.

10. Gehäuse nach Anspruch 7, in welchem die Gehäusaußenhülle (8) Hochleistungs-Polyethylenfasern enthält.

11. Gehäuse nach Anspruch 10, in welchem die Gehäuseaußenhülle (8) DYNEE-MA™ Fasern enthält.

12. Gehäuse nach einem der vorhergehenden Ansprüche, in welchem die Gehäuseaußenhülle aus trocken gewickelten Fasern hergestellt ist.

13. Gehäuse nach einem der vorhergehenden Ansprüche, in welchem die Gehäuseaußenhülle (8) Fasern enthält, die im Wesentlichen tangential gewickelt sind.

14. Gehäuseeinheit mit einem Gehäuse nach einem der vorhergehenden Ansprüche, in welcher das Gehäuse in einer kardanischen Aufhängung (13) abgestützt ist.

15. Gehäuseeinheit nach Anspruch 14, in welcher das Gehäuse eine Schwungradeinrichtung aufnimmt, wobei das die Schwungradeinrichtung aufnehmende Gehäuse einen Schwerpunkt hat und die kardanische Aufhängung (13) mit dem Gehäuse entlang einer Schwenkachse (14a, 14b) oberhalb des Schwerpunkts verbunden ist.

16. Gehäuseeinheit nach Anspruch 14, in welcher das Gehäuse eine Schwungradeinrichtung aufnimmt, wobei das die Schwungradeinrichtung aufnehmende Gehäuse einen Schwerpunkt hat und die kardanische Aufhängung (13) mit dem Gehäuse entlang einer Schwenkachse (14a, 14b) durch den Schwerpunkt hindurch verbunden ist.

## Revendications

1. Confinement, en particulier pour un dispositif de volant, le confinement comprenant :
- une paroi de confinement intérieure sensiblement cylindrique (7) ayant deux bords opposés ;
- une enveloppe périphérique extérieure de confinement (8) entourant ladite paroi de confinement intérieure ; et
- un premier couvercle de confinement (9a) et un second couvercle de confinement (9b) venant en butée contre les bords respectifs de la paroi de confinement intérieure (7),
**caractérisé en ce que** la paroi de confinement intérieure (7) est en métal, les premier et second couvercles de confinement (9a, 9b) sont en métal ou en matériau composite, et l'enveloppe périphérique extérieure de confinement (8) est en un matériau à haute résistance et faible densité, et **caractérisé par** une construction de support comprenant des première et seconde bagues de fixation (10a, 10b ; 10c, 10d ; 10e, 10f) s'étendant au voisinage de la circonférence extérieure des premier et second couvercles de confinement (9a, 9b) respectifs, les bagues de fixation étant reliées entre elles par des éléments d'absorption d'impact axial (11).

2. Confinement selon la revendication 1, dans lequel une bague d'interface (12a, 12b ; 12c) est montée entre un couvercle de confinement (9a, 9b) et une bague de fixation associée (10a, 10b ; 10c).

3. Confinement selon la revendication 2, dans lequel la bague d'interface (12a, 12b ; 12c) est en polyéthylène (PE).

4. Confinement selon l'une des revendications précédentes, dans lequel une bague de fixation (10a, 10b ; 10c, 10d ; 10e, 10f) comprend une partie en forme d'anneau s'étendant sur le couvercle de confinement (9a, 9b) associé.

5. Confinement selon la revendication 4, dans lequel une bague de fixation (10c, 10d ; 10e, 10f) comprend en outre une partie en forme de cylindre s'étendant autour d'une zone du bord associé de la paroi de confinement intérieure (7).

6. Confinement selon l'une des revendications précédentes, dans lequel la paroi de confinement intérieure (7) est en aluminium.

7. Confinement selon l'une des revendications précédentes, dans lequel l'enveloppe périphérique extérieure de confinement (8) contient des fibres, telles des fibres de carbone, des fibres de verre ou des fibres synthétiques.

8. Confinement selon la revendication 7, dans lequel l'enveloppe périphérique extérieure de confinement (8) contient des fibres d'aramide.

9. Confinement selon la revendication 8, dans lequel l'enveloppe périphérique extérieure de confinement (8) contient l'un parmi des fibres de KEVLAR™, de NOMEX^{™}, et de TWARON^{™}.

10. Confinement selon la revendication 7, dans lequel l'enveloppe périphérique extérieure de confinement (8) contient des fibres de polyéthylène à haute performance.

11. Confinement selon la revendication 10, dans lequel l'enveloppe périphérique extérieure de confinement (8) contient des fibres de DYNEEMA^{™}.

12. Confinement selon l'une des revendications précédentes, dans lequel l'enveloppe périphérique extérieure de confinement est en fibres enroulées à sec.

13. Confinement selon l'une des revendications précédentes, dans lequel l'enveloppe périphérique extérieure de confinement (8) contient des fibres enroulées de façon sensiblement tangentielle.

14. Ensemble de confinement comprenant un confinement selon l'une quelconque des revendications précédentes, dans lequel le confinement est supporté dans un cadre de suspension à cardan (13).

15. Ensemble de confinement selon la revendication 14, dans lequel le confinement reçoit un dispositif de volant, le confinement recevant le dispositif de volant ayant un centre de gravité, et le cadre de suspension à cardan (13) est relié au confinement le long d'un axe de pivot (14a, 14b) au-dessus du centre de gravité.

16. Ensemble de confinement selon la revendication 14, dans lequel le confinement reçoit un dispositif de volant, le confinement recevant le dispositif de volant ayant un centre de gravité, et le cadre de suspension à cardan (13) est relié au confinement le long d'un axe de pivot (14a, 14b) passant par le centre de gravité.
